# EUROPEAN PATENT APPLICATION

(11) **EP 1 376 571 A2**
(43) Date of publication of application: **02.01.2004**
(21) Application number: 03000233.1
(22) Date of filing: 08.01.2003
(51) Int. Cl.: G11B 19/02

(54) **Composite apparatus and method therefor**

(30) Priority: 25.06.2002 KR 2002035763
(71) Applicant: LG ELECTRONICS INC., Seoul (KR)
(72) Inventor: Chu, Jeong-Hwan, Cheonan, Chungcheongnam-Do (KR)
(74) Representative: COHAUSZ & FLORACK

(57) **Abstract**

An apparatus for setting shared data in a composite apparatus of a VCR and a DVDP and a method thereof can set the shared data of the composite apparatus of the VCR and the DVDP in one unit between the VCR unit and the DVDP unit, and the shared data is directly transmitted and identically set in the other unit. Further, a composite apparatus of a first electronic appliance and a second electronic appliance having different functions from each other and a method thereof can set the shared data of the composite apparatus is set in the first electronic appliance, and the shared data set in the first electronic appliance is identically set in the second electronic appliance.

## Description

### BACKGROUND OF THE INVENTION

### 1. Field of the Invention

The present invention relates to a composite apparatus, and more particularly, to a composite apparatus having a video cassette recorder and a video disc player.

### 2. Background of the Related Art

A related art composite apparatus compounds a video cassette recorder (VCR) and a digital video disk player (DVDP) as one apparatus. However, a basic control performance is carried out by each microcomputer respectively installed at the VCR unit and the DVDP unit in the composite apparatus. Accordingly, the user had to set the data in the VCR unit through the key input unit and then had to also set the same type data in the DVDP unit through the use of another key input unit. Such structure and functionality leads to increased costs and user effort.

The above references are incorporated by reference herein where appropriate for appropriate teachings of additional or alternative details, features and/or technical background.

### SUMMARY OF THE INVENTION

An object of the invention is to solve at least the above problems and/or disadvantages and to provide at least the advantages described hereinafter.

Another object of the present invention is to provide an apparatus and method for setting shared data in a composite apparatus of a video cassette device and an optical disk device that determines when the shared data of the video cassette device and the optical disk device is set in one unit of the video cassette device and the optical disk device, and automatically sets the shared data in the other unit.

Another object of the present invention is to provide an apparatus and method for setting shared data in a composite apparatus of a video cassette recorder (VCR) and a digital video disk player (DVDP) that transfers shared data upon entry from the entering unit to the non-entering unit of the VCR and DVDP.

Another object of the present invention is to provide an apparatus and method for setting shared data in a composite apparatus of a VCR and a DVDP that directly transfers common required data.

Another object of the present invention is to provide an apparatus and method for setting shared data in a composite apparatus of a VCR and a DVDP that transfers shared data without user action.

Another object of the present invention is to provide an apparatus and method for setting shared data in a composite apparatus of a VCR and a DVDP that uses a single key input unit.

Another object of the present invention is to provide an apparatus and method for setting shared data in a composite apparatus of a VCR and a DVDP that uses a connector to directly transfer data shared between the VCR and the DVDP through microprocessors in each of the VCR and the DVDP.

To achieve at least these and other advantages in whole or in part and in accordance with the purpose of the present invention, as embodied and broadly described herein, there is provided a system that includes a first device with a first central processing unit that performs a first function, wherein the first device receives required information before performing the first function, and a second device with a second central processing unit that performs a second function, wherein the second device receives the required information before performing the second function, wherein the first and second functions are different, and wherein the system is configured to receive the required information only once before said first and second devices are respectively operated to perform both the functions.

To further achieve these and other advantages in whole or in part and in accordance with the purpose of the present invention, as embodied and broadly described herein, there is provided a composite DVDP and VCR device that includes a VCR having a first microprocessor and a first nonvolatile memory, wherein the VCR uses first information, a DVDP having a second microprocessor and a second nonvolatile memory, wherein the DVDP uses the first information, and wherein each microprocessor includes a central processor unit (CPU), a storage device and a display controller, a connector connected between first and second CPUs that is configured to transfer the first information between the CPUs, a switching unit coupled between first and second display controllers that is configured to drive a display device, wherein the switching unit is connected to a single CPU, and a single user input unit configured to receive control information including the first information from a user, wherein the single user input unit is in one of the VCR and the DVDP that includes the single CPU.

To further achieve these and other advantages in whole or in part and in accordance with the purpose of the present invention, as embodied and broadly described herein, there is provided a method for operating a composite apparatus of a first electronic appliance and a second electronic appliance having different functions, the method including setting a shared data of the composite apparatus in the first electronic appliance, and directly setting the shared data set in the first electronic appliance in the second electronic appliance.

To further achieve these and other advantages in whole or in part and in accordance with the purpose of the present invention, as embodied and broadly described herein, there is provided an apparatus for setting shared data in a composite apparatus that includes a key input unit configured to select at least one selectable shared menu responsive to a request, a first central processing unit coupled to the key input unit, wherein the first central processing unit is configured to transmit shared data of the composite apparatus of a first electronic appliance and a second electronic appliance corresponding to the at least one selected shared menu, a first storage unit configured to store the shared data corresponding to the at least one shared menu selected from the first central processing unit, a second central processing unit configured to receive the shared data transmitted from the first central processing unit and output the received shared data, and a second storage unit configured to store the shared data outputted from the second central processing unit.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

Figure 1 is a block diagram showing a related art apparatus for setting shared data in a composite apparatus of a VCR and a DVDP;

Figure 2 is a block diagram showing a preferred embodiment of a composite apparatus of VCR and a DVDP according to the present invention;

Figure 3 is a diagram that illustrates an exemplary initial set up menu and a country selection menu of a VCR according to the present invention;

Figure 4 is a flowchart that shows a preferred embodiment of a method for transmitting a country data and a language data from the VCR unit to the DVDP unit of the composite apparatus of the VCR and the DVDP according to the present invention;

Figure 5 is a flowchart that shows a preferred embodiment of a method for automatically setting the country data and the language data transmitted to the DVDP unit of the composite apparatus according to the present invention;

Figure 6 is a diagram that shows an exemplary initial set up menu and a country selection menu of the DVDP according to the present invention;

Figure 7 is a flowchart that shows a preferred embodiment of a method for transmitting a country data and a language data from the DVDP unit to the VCR unit of the composite apparatus of the VCR and the DVDP according to the present invention; and

Figure 8 is a flowchart that shows a preferred embodiment of a method for automatically setting the country data and the language data transmitted to the VCR unit of the composite apparatus according to the present invention.

### DETAILED DESCRIPTION OF PREFERRED EMBODIMENTS

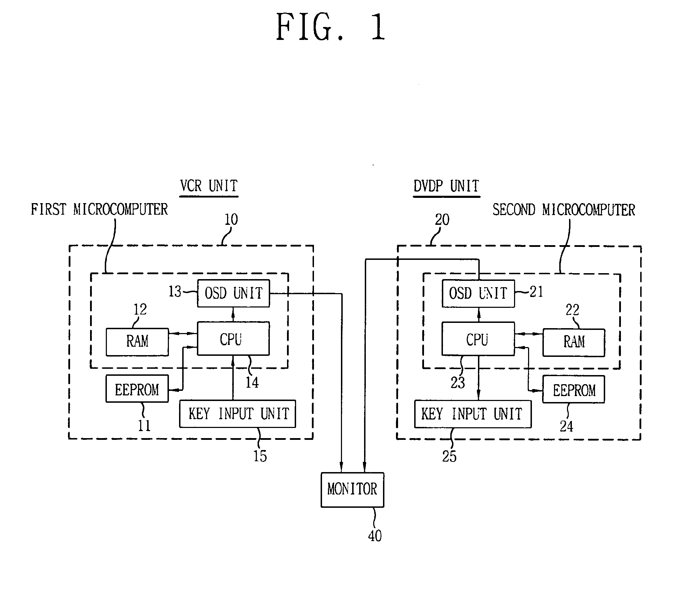

Figure 1 is a block diagram showing a related art composite apparatus of a video cassette recorder (VCR) and a digital video disk player (DVDP). As shown in Figure 1, the composite apparatus of the VCR and the DVDP includes key input units 15 and 25, central processing units 14 and 23, on screen display units 13 and 21, electrically erasable programmable read only memory (EEPROM) 11 and 24 and random access memory 12 and 22. The key input unit 15 is for selecting a special menu by a user's request received via an "on screen display (OSD)" displayed on a monitor 40. The central processing unit 14 is for outputting an initial setup menu information if an initial setup menu of the VCR unit 10 is selected by the user, and for outputting a data corresponding to a selected special menu if a special menu on the setup menu is selected through the key input unit 15 by the user. The on screen display (OSD) unit 13 is for displaying the special menu on the monitor 40 by depending on a control signal of the central processing unit 14, and the EEPROM 11 is for storing a data corresponding to the special menu selected from the central processing unit 14. The key input unit 25 is for selecting the special menu by a user's request preferably via an on "on screen display (OSD)" displayed on the monitor 40.

The central processing unit 23 is for outputting an initial setup menu information if an initial setup menu of the DVDP unit 20 is selected by the user and outputting a data corresponding to a selected special menu if a special menu on the setup menu is selected through the key input unit 25 by the user. The OSD unit 21 is for displaying the setup menu of the DVDP unit 20 on the monitor 40, and the EEPROM 24 for storing a data outputted from the central processing unit 23.

A first microcomputer in the apparatus for setting data of the composite apparatus of the VCR and the DVDP can be installed in the VCR unit 10 of the composite apparatus of the VCR and the DVDP. The first microcomputer preferably includes the central processing unit 14, the random access memory (RAM) 12 for storing a temporal data of the central processing unit 14, and the OSD unit 13 for displaying a set up menu on the monitor 40 according to a control signal of the central processing unit 14.

A second microcomputer in the apparatus for setting data of the composite apparatus of the VCR and the DVDP can be installed in the DVDP unit 20 of the composite apparatus of the VCR and the DVDP. The second microcomputer preferably includes the central processing unit 23, the random access memory (RAM) 22 for storing a temporal data of the central processing unit 23, and the OSD unit 21 for displaying a set up menu on the monitor 40 according to a control signal of the central processing unit 23.

Thus, in the related art apparatus for setting data of a composite apparatus of the VCR and the DVDP as shown in Figure 1, even if a data corresponding to the set up menu is a data that is both used in the VCR unit and the DVDP unit (e.g., shared data), the user sets a data corresponding to the set up menu in the VCR unit and then again in the DVDP unit, respectively, through the key input units 15 and 25.

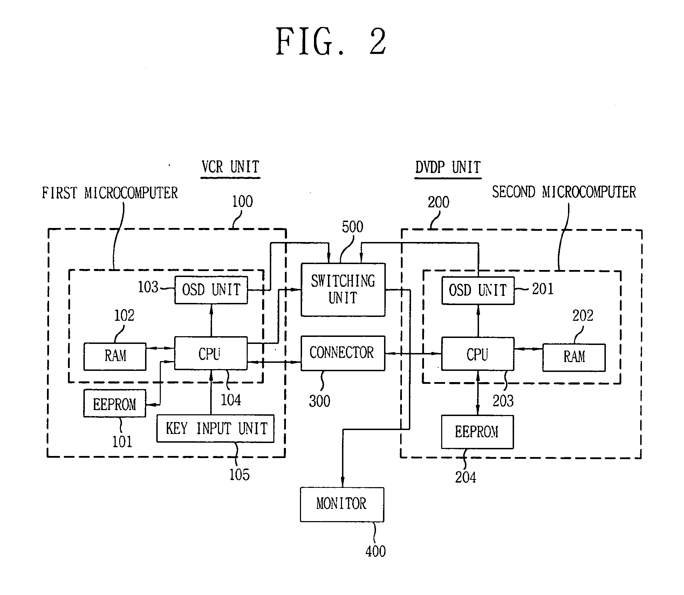

Preferred embodiments of a composite apparatus and methods for using the same where a user can set a shared data used both at a video cassette player and a digital optical disk player of the composite apparatus and can include, for example, setting the shared data in one unit of the composite apparatus and the shared data can be directly set or immediately transferred to the other unit, transferred and set without additional user action, or the user can enter the shared data only once in the composite apparatus. Shared data can include, for example, a country data corresponding to a country code, a language data corresponding to a language code, and a parent lock data, and can be required before operating the corresponding unit. Figure 2 is a block diagram showing a preferred embodiment of an apparatus for setting shared data in the composite apparatus of the VCR and the DVDP according to the present invention.

As shown in Figure 2, the apparatus for setting shared data in the composite apparatus has a VCR unit 100 and a DVDP unit 200 and can include key input unit 105, CPUs 104 and 203, OSD units 103 and 201, RAMs 102 and 202, EEPROMs 101 and 204, a switching unit 500, a connector 300 and monitor 400. The key input unit 105 can select a special menu by a user's request using an "on screen display (OSD)" displayed on the monitor 400 or the like. The central processing unit 104 can output an initial setup menu information if an initial setup menu of the VCR unit 100 is selected by the user, and output a shared data corresponding to the selected shared menu if the shared menu on the setup menu is selected through the key input unit 105 by the user or the like. The on screen display (OSD) unit 103 can display the shared menu on the monitor 400 in accordance with a control signal of the central processing unit 104 and the electrically erasable programmable read-only memory (EEPROM) 101 can store the shared data corresponding to the shared menus selected from the central processing unit 104. The connector 300 is preferably for transmitting the shared data corresponding to the shared menus selected from the central processing unit 104.

The central processing unit 203 can receive the data transmitted through the connector 300, set the received data as a shared data of the DVDP unit 200, and control storing the shared data in an EEPROM 204. If the shared data corresponding to the shared menus are not received through the connector 300, the CPU 203 is preferably for outputting the set up menu of the DVDP unit 200 to the monitor 400, setting the shared data corresponding to the selected menu as a shared data of the DVDP unit 200 when the user selects one menu among the shared menus displayed on the set up menus of the DVDP unit 200, and can control storing the shared data in the EEPROM 204. The OSD unit 201 can display the set up menu and the shared menus of the DVDP unit 200 on the monitor 400, and the EEPROM 204 can store a shared data corresponding to a shared menu of the DVDP unit 200. The switching unit 500 is preferably for outputting the shared menus outputted from the OSD unit 103 and the shared menus outputted from the OSD unit 201 to the monitor 400 in accordance with the control signal of the central processing unit 104. However, the present invention is not intended to be so limited as other control mechanisms of the switching unit 500 can be used.

Shared menus preferably indicate a commonly-used menu in the VCR unit and the DVDP unit of the composite apparatus of the VCR and the DVDP. That is, the shared menu can include a country selection menu, a language selection menu for displaying language information of several countries, and a parent lock menu for preventing a person under age from watching a film for an adult or a special broadcasting program by endowing a grade to the special broadcasting program or the like. Also, the shared data can include a country data corresponding to the country code, a language data corresponding to the country code, a parent lock rating grade data corresponding to the parent lock menu or the like used in connection with a shared menu. An exemplary language code is described in the international standard organization (ISO) 639, and the country code is described in the ISO 3166. However, the present invention is not intended to be so limited.

As shown in Figure 2, the first microcomputer in the apparatus for setting shared data of the composite apparatus of the VCR and the DVDP can be installed in the VCR unit 100 of the composite apparatus of the VCR and the DVDP. The first microcomputer can include the central processing unit 104, the random access memory-(RAM) 102 for storing a temporal data of the central processing unit 104, and the OSD unit 103 for displaying various menus on the monitor 400 according to the control signal of the central processing unit 104.

The second microcomputer in the apparatus for setting shared data of the composite apparatus of the VCR and the DVDP can be installed in the DVDP unit 200 of the composite apparatus of the VCR and the DVDP, and can include the central processing unit 203, the random access memory (RAM) 202 for storing a temporal data of the central processing unit 203, and an OSD unit 201 for displaying various menus on the monitor 400 based on the control signal of the central processing unit 203. In accordance with preferred embodiments of the present invention, storage units having various structures for storing a data can be used instead of the EEPROMs 104 and 204, and the RAMs 103 and 203.

Operations for outputting a shared data corresponding to the shared menu from the central processing unit 104 in the VCR unit to the central processing unit 203 of the DVDP unit will be described. Also, operations for transmitting shared data from the central processing unit 203 of the DVDP unit to the central processing unit 104 in the VCR unit 100 will be described.

First, if the user selects an auto channel memory system (ACMS) menu to select a country selection menu among the shared menus through the key input unit 105, the central processing unit 104 in the VCR unit preferably displays the country codes on the monitor 400 or the like through the OSD unit 103. If the user selects a special country code among the country codes, a country data corresponding to the selected country code is also outputted to the central processing unit 203 of the DVDP unit 200. At this time, the central processing unit 203 of the DVDP unit 200 stores the country data received through the connector 300 to the EEPROM 204, so that the same country data as that of a country code set in the VCR unit is identically set in the DVDP unit. Accordingly, the user need not store the country data in the respective VCR unit 100 and the DVDP unit 200. That is, if the user sets the country data in the VCR unit 100, the country data is set without additional user action in the DVDP unit 200, too. Preferably, the central processing unit 104 in the VCR unit 100 can output a country data corresponding to the country code and a language data of a language code corresponding to the country code to the central processing unit 203 of the DVDP unit through the connector 300 on the basis of the selected country code.

Also, if the user selects the language menu among the shared menus through the key input unit 105, the central processing unit 104 in the VCR unit 100 preferably displays the language code on the monitor 400 through the OSD unit 103. If the user selects a special language code among the language code, a language data corresponding to the selected language can also be outputted to the central processing unit 203 of the DVDP unit through the connector 300. At this time, the central processing unit 203 of the DVDP unit 200 stores a language data received through the connector 300 into the EEPROM 204, so that the same language data that was set in the VCR unit 100 is identically set in the DVDP unit.

Accordingly, the user does not have to set the language data in both the VCR unit 100 and the DVDP unit 200 respectively. That is, if the user sets the language data in the VCR unit 100, the language data is transmitted and set in the DVDP unit 200.

Also, if the user selects a parent lock menu among the shared menus through the key input unit 105, the central processing unit 104 in the VCR unit can display a plurality of parent lock rating grades, for example, on the monitor 400 through the OSD unit 103. When the user selects a special rating grade among the plurality of rating grades, the parent lock rating grade data corresponding to the selected rating grade is outputted to the central processing unit 203 of the DVDP unit 200. At this time, the central processing unit 203 of the DVDP unit 200 preferably stores the parent lock rating grade data received through the connector 300 in the EEPROM 204 so that the same data as the parent lock rating grade data set in the VCR unit 100 is identically set in the DVDP unit 200, too. Accordingly, the user need not set the parent lock rating grade data in both the VCR unit 100 and the DVDP unit 200, respectively. That is, if the user sets the parent lock rating grade data in the VCR unit 100, the parent lock rating grade data is set in the DVDP unit, too.

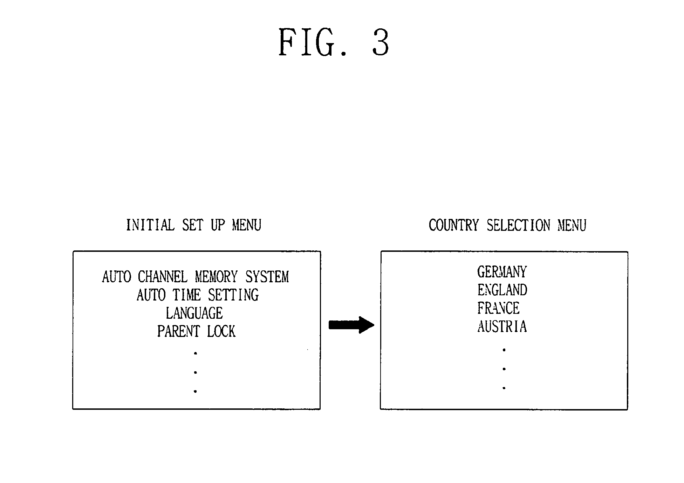

Preferred embodiments of a method for operating a composite apparatus of the VCR and the DVDP according to the present invention will now be described. As shown in Figure 3, the country data of the country code, the language data of the language code, and the parent lock rating grade data can be included in shared menus from the VCR unit 100 of the composite apparatus to the DVDP 200.

Figure 3 shows an exemplary initial set up menu and a country selection menu of a VCR according to preferred embodiments of the present invention. That is, it is possible for the user to select a wanted language on the initial set up menu and to set the selected language data to the VCR unit 100 and then the DVDP unit 200. The country selection menu is preferably included in the auto channel memory system (ACMS) and can be displayed on the monitor 400. The language can include Korean, English, German, Spanish, French, Portuguese, Netherlands, Japanese, Chinese, Italian, and etc.

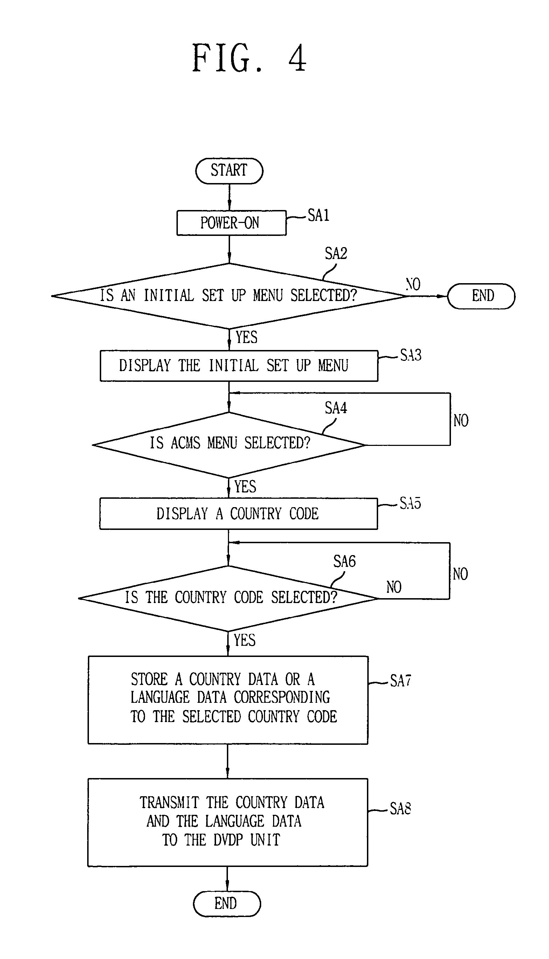

Figure 4 is a flowchart that shows a preferred embodiment of a method for transmitting a country data or a language data (e.g., shared data) from a VCR unit to a DVDP unit of a composite apparatus of the VCR and the DVDP according to the present invention. As shown in Figure 4, after a process starts, if the composite apparatus of the VCR and the DVDP is turned on (step SA1), the central processing unit 104 of the VCR unit 100 can determine that an initial set up menu is selected by the user (step SA2). If the initial setup menu is not determined (e.g., by the user or CPU) the process preferably ends.

If the initial set up menu is selected by the user, the central processing unit 104 transmits the set up menu to the OSD unit 103. The OSD unit 103 can display the on screen display (OSD) that represents the set up menu on the monitor 400 (step SA3).

Then, the central processing unit 104 can determine whether the ACMS menu corresponding to the shared menu on the set up menu displayed on the monitor 400 is selected by the user (step SA4). If the ACMS menu is selected by the user, the central processing unit 104 can output the country selection menu to the OSD unit 103, the country selection menu having the country codes that the user can use to select a wanted or prescribed country. If selected, the OSD unit 103 can display the OSD that represents the country selection menu on the monitor 400 through the switching unit 500 (step SA5).

If the user selects a desired country code at the country selection menu displayed on the monitor 400 (step SA6), the central processing unit 104 can transmit a country data corresponding to the selected country code and a language data of a language code corresponding to the country code directly to the central processing unit 203 of the DVDP unit preferably through the connector 300. At this time, the EEPROM 101 stores a country data and a language data corresponding to the selected country code based on a control signal of the central processing unit 104 (steps SA7-SA8). Alternatively, if the user does not select the ACMS menu corresponding to the shared menu on the set up menu displayed on the monitor 400 and selects a special language code among the language menu (for example LANGUAGE as shown in Figure 3), the central processing unit 104 can transmit a language data of the selected language code to the central processing unit 203 of the DVDP unit 200.

Further, the central processing unit 104 can display a plurality of parent lock rating grades corresponding to the parent lock menu among the shared menus as well as the country data or the language data on the monitor 400 through the OSD unit 103. Preferably, and if the user selects a special rating grade among the rating grades, the parent lock rating grade data corresponding to the selected rating grade can be outputted to the central processing unit 203 of the DVDP unit through the connector 300.

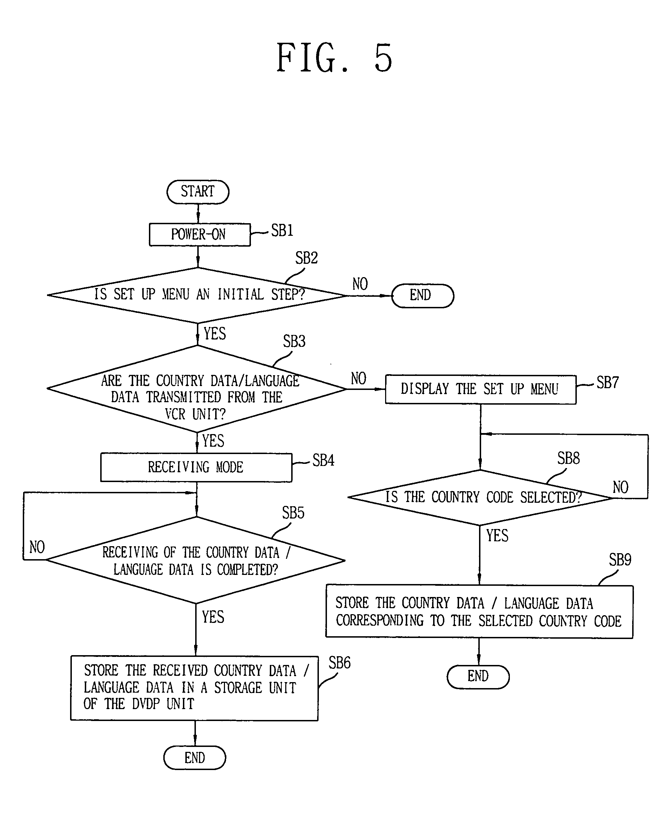

Figure 5 is a flowchart that shows a preferred embodiment of a method for identically setting the country data and the language data transmitted to the DVDP unit of the composite apparatus according to the present invention. As shown in Figure 5, after a process starts, if the composite apparatus of the VCR and the DVDP is turned on (step SB1), the central processing unit 203 of the DVDP unit 200 can determine that the set up menu of the DVDP unit 200 is an initial step (or in an initial state) (step SB2). If the initial setup menu is not determined (e.g., by the user or CPU) the process preferably ends. If the set up menu of the DVDP unit 200 is the initial step, the central processing unit 203 can determine whether the country data and the language data are transmitted from the connector 300 (step SB3). If the country data and the language data are transmitted from the connector 300, the central processing unit 203 can convert a mode of the DVDP unit into a receiving mode (step SB4) and then receives the country data and the language data. If the reception of the country data and the language data is determined to be completed (step SB5), the received country data and the language data are outputted to a storage unit, e.g., the EEPROM 204.

The EEPROM 204 preferably stores the country data and the language data outputted from the central processing unit 203. Accordingly, the user does not have to set the country data and the language data in the VCR unit and the DVDP unit, respectively. The central processing unit 203 can automatically set a caption language, a subtitle language, and an audio language recorded in the DVD into the language of the country selected by the user on the basis of the country data. It is also possible to set a preferential language in a country where more than two languages are spoken and to store it (step SB6).

In the meantime, if the country data and the language data are not transmitted from the CPU 104 using, for example, the connector 300 (step SB3), the central processing unit 203 of the DVDP unit 200 preferably outputs the set up menu of the DVDP unit to the OSD unit 201. The OSD unit 201 can cause the display of the OSD that represents the set up menu of the DVDP unit having the country codes on the monitor 400 through the switching unit 500 (step SB7).

If the user selects a wanted country code among the country codes (step SB8), the central processing unit 203 of the DVDP unit 200 can output the country data and the language data corresponding to the selected country code to the EEPROM 204 or the like. At this time, the EEPROM 204 stores the country data and the language data corresponding to the selected country code (step SB9).

In addition, the central processing unit 203 can also receive additional information (e.g., the parent lock rating grade data) selected by the user as well as the country data and the language data through the connector 300, and output the received additional data (e.g., parent lock rating grade data) to the EEPROM 204. Accordingly, at this time, the EEPROM 204 can store the received parent lock rating grade data.

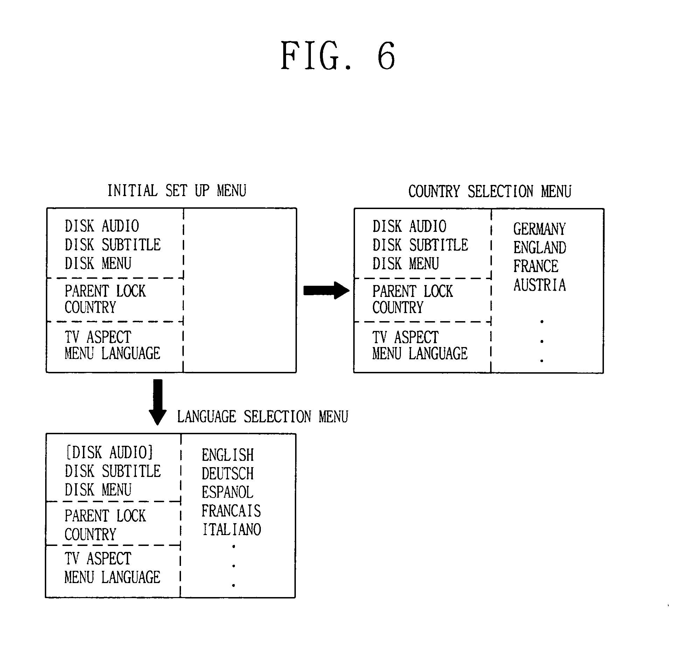

Figure 6 shows an exemplary initial set up menu and the country selection menu of the DVDP according to preferred embodiments of the present invention. That is, if the user selects a disc audio on the initial set up menu of the DVDP unit that preferably includes the disc audio, a disc sub-title, a disc menu, a parent lock menu, a country menu for representing a country code, a TV aspect menu for representing an aspect ratio, and a menu language item, a language menu for representing languages of several counties (a language code) is displayed on the screen as the 'OSD' form. The languages can include Korean, English, German, Spanish, French, Portuguese, Netherlands, Japanese, Chinese, Italian or the like and can then be selected.

Also, if the user selects the country on the disc audio menu of the DVDP unit, preferably the country selection menu that represents countries is displayed on the screen as the 'OSD' form. The country selection menu can be included and selected in the disc audio menu and displayed on the monitor 400 as the 'OSD' form. Also, if the user selects the country menu on the initial set up menu of the DVDP unit, the country selection menu can be displayed as the 'OSD' form.

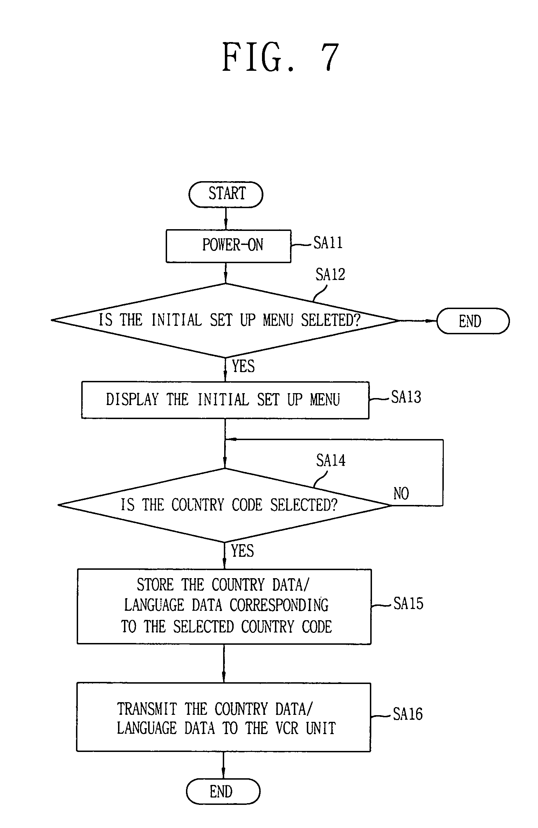

Figure 7 is a flowchart that shows a preferred embodiment of a method for transmitting the country data and the language data from the DVDP unit to the VCR unit of the composite apparatus of the VCR and the DVDP according to the present invention. As shown in Figure 7, after process starts if the composite apparatus of the VCR and the DVDP is turned on (step SA11), the central processing unit 203 of the DVDP unit 200 can determine whether the initial set up menu is selected by the user (step SA12). If the initial setup menu is not determined (e.g., by the user or CPU), the process preferably ends. If the initial set up menu is selected by the user, the central processing unit 203 transmits the set up menu to the OSD unit 201. The OSD unit 201 preferably causes the display of the OSD that represents the set up menu on the monitor 400 through the switching unit 500 (step SA13).

Then, if the user selects his wanted country code among the country selection menus having the country codes accessed using or displayed on the set up menu displayed on the monitor 400 (step SA14), the central processing unit 203 can transmit a country data or a language data corresponding to the selected country code to the central processing unit 104 of the VCR unit 100 preferably through the connector 300. However, the present invention is not intended to be so limited. At this time, the EEPROM 204 preferably stores the country data or the language data corresponding to the selected country code by depending on the control signal of the central processing unit 203 (steps SA15-SA16).

Further, the central processing unit 203 can concurrently or subsequently display a plurality of parent lock rating grades corresponding to the parent lock menu among the set up menus as well as the country data or the language data on the monitor 400 through the OSD unit 201. Preferably, and if the user selects a special rating grade among the rating grades, the parent lock rating grade data corresponding to the selected rating grade can be outputted to the central processing unit 104 of the VCR unit through the connector 300.

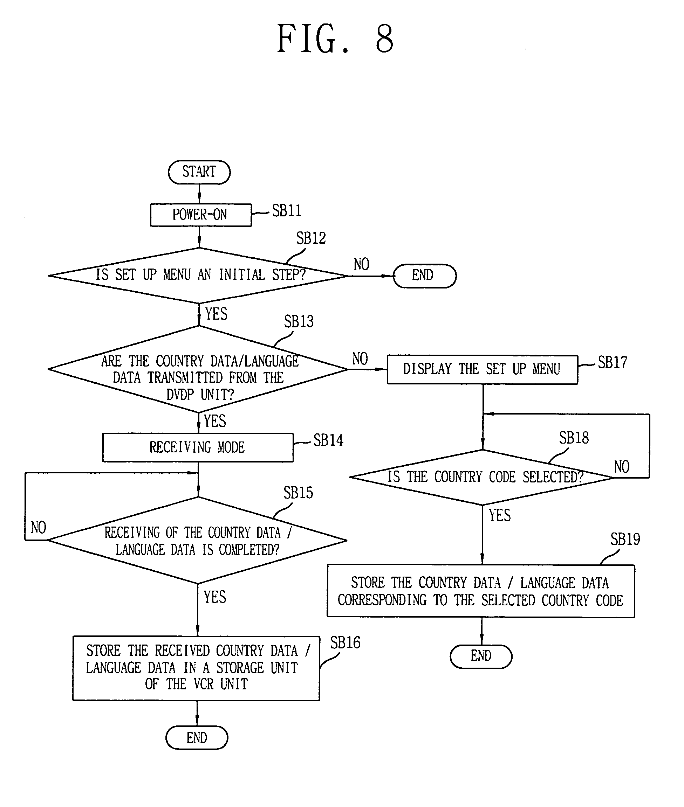

Figure 8 is a flowchart that shows a preferred embodiment of a method for concurrently setting the country data and the language data transmitted to the VCR unit 100 of the composite apparatus of the VCR and the DVDP according to the present invention. As shown in Figure 8, if the composite apparatus is turned on (step SB11), the central processing unit 104 of the VCR unit 100 can determine whether the set up menu of the VCR unit 100 is an initial state (step SB12). If the initial setup menu is not determined (e.g., by the user or CPU), the process preferably ends. If the set up menu of the VCR unit 100 is the initial state, the central processing unit 104 can determine whether a country data and a language data are transmitted from the connector 300 (e.g., the other unit) (step SB13). If the country data and the language data are transmitted from the connector 300, the central processing unit 104 preferably converts the mode of the VCR unit 100 into the receiving mode (step SB14) and then receives the country data and the language data. If the reception of the country data and the language data determined to be completed (step SB15), the received country data and the language data are outputted to a storage unit, e.g., the EEPROM 101.

The EEPROM 101 preferably stores the country data and the language data outputted from the central processing unit 104. Accordingly, the user does not have to set the country data and the language data in both the VCR unit 100 and the DVDP unit 200, respectively. Rather, when the user stores the country data or the language data either in the VCR unit 100 or in the DVDP unit 200, the country data or the language data is stored in the other unit directly respective to the first unit.

If the country data and the language data are not transmitted from the connector 300 (step SB13), the central processing unit 104 of the VCR unit 100 preferably outputs the set up menu of the VCR unit 100 to the OSD unit 103. The OSD unit 103 can display the OSD that represents the set up menu of the VCR unit having the country codes on the monitor 400 through the switching unit 500 (step SB17).

If the user selects a wanted country code among the country codes (step SB18), the central processing unit 104 of the VCR unit 100 can output the country data and the language data corresponding to the selected country code to the EEPROM 101 or the like. At this time, the EEPROM 101 stores the country data and the language data corresponding to the selected country code (step SB19).

In addition, the central processing unit 104 can also receive additional information (e.g., the parent lock rating grade data) selected by the user as well as the country data and the language data through the connector 300, and output the received additional information (e.g., parent lock rating grade data) to the EEPROM 101. At this time, the EEPROM 101 stores the received parent lock rating grade data.

Accordingly, if the user sets the shared data (e.g., the country data, the language data, the parent lock rating grade data, and etc.) in either the VCR unit or the DVDP unit, the shared data is automatically set in the other unit without the user's process.

In addition, in preferred embodiments according to the present invention, a performance OSD language data can be transmitted or received in the composite apparatus of an advanced television system committee (ATSC) set top box and the DVDP unit.

In preferred embodiments of an apparatus for setting shared data of the composite apparatus and the method thereof, if the user sets the shared data including, for example, the country data, the language data, the parent lock rating grade data commonly used in the VCR unit and the DVDP unit in the one unit (for example, the VCR unit), the shared data can be directly set in the other unit (for example, the DVDP unit) too, so that the user does not have to set the shared data in the VCR unit and the DVDP unit, respectively.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A system, comprising:
a first device with a first central processing unit that performs a first function, wherein the first device receives required information before performing said first function; and
a second device with a second central processing unit that performs a second function, wherein the second device receives said required information before performing said second function, wherein the first and second functions are different, and wherein the system is configured to receive said required information only once before said first and second devices are respectively operated to perform both said functions.

2. The system of 1, wherein one of said first and second devices is configured to receive said required information, and the other of said first and second devices receives said required information directly from said one device.

3. The system of claim 2, comprising a connector coupled between the first and second devices that directly transfers said required information between the devices.

4. The system of claim 2, wherein one of the first and second electronic devices is a VCR, and wherein the other of the first and second electronic devices is a DVD.

5. The system of claim 1, wherein said first and second devices are configured to receive said required information through a set-up mode that is performed only once by either the first device or the second device to enter the required information.

6. The system of claim 1, wherein the system has only a single key input unit that is configured to receive user input.

7. A composite DVDP and VCR device, comprising:
a VCR having a first microprocessor and a first nonvolatile memory, wherein the VCR uses first information;
a DVDP having a second microprocessor and a second nonvolatile memory, wherein the DVDP uses the first information, and wherein each microprocessor comprises,
a central processor unit (CPU),
a storage device, and
a display controller;
a connector connected between first and second CPUs that is configured to transfer the first information between the CPUs;
a switching unit coupled between first and second display controllers that is configured to drive a display device, wherein the switching unit is connected to a single CPU; and
a single user input unit configured to receive control information including the first information from a user, wherein the single user input unit is in one of the VCR and the DVDP that includes the single CPU.

8. The composite device of claim 7, wherein said first information is received only once by composite device before the VCR and the DVDP are both operated.

9. The composite device of claim 8, wherein said required information is received through a set-up menu, wherein the VCR comprises a first read only memory, and wherein the DVDP comprises a second read only memory.

10. A method for operating a composite apparatus of a first electronic appliance and a second electronic appliance having different functions, the method comprising:
setting a shared data of the composite apparatus in the first electronic appliance; and
directly setting the shared data set in the first electronic appliance in the second electronic appliance.

11. The method of claim 10, wherein the shared data includes at least one of a country data corresponding to a country code, a language data corresponding to a language code and a parent lock rating grade data.

12. The method of claim 11, wherein the setting a shared data comprises:
displaying a plurality of country codes on a screen;
storing the country data corresponding to a country code selected by a user among the country codes in a single storage unit connected to the first electronic appliance.

13. The method of claim 12, comprising storing a language data of a language code corresponding to the country code selected by the user in the single storage unit.

14. The method of claim 13, wherein the directly setting comprises storing the stored country data and the language data into a storage unit located in the second electronic appliance responsive to said data being stored in the single storage unit.

15. The method of claim 14, wherein the directly setting comprises setting a language recorded in a disc into a language of the country selected by the user based on the country code selected by the user, and wherein the language recorded in the disc includes at least one of a caption language, an audio language and a sub-title language.

16. The method of claim 10, wherein the first electronic appliance is a video cassette recorder and the second electronic appliance is a digital video disc player.

17. The method of claim 10, wherein the setting comprises:
displaying a parent lock rating grades on a screen; and
storing a parent lock rating grade data corresponding to the parent lock rating grades selected by the user in a single storage unit between the first and second electronic appliances, wherein the directly setting comprises automatically storing the stored parent lock rating grade data into a storage unit located at the other of the first and second electronic appliances.

18. The method of claim 10, wherein the directly setting comprises transferring the shared data set in the first electronic appliance to the second electronic appliance without user action.

19. The method of claim 10, wherein the directly setting comprises:
transferring the shared data from the first electronic appliance to a connector responsive to the shared data being set in the first electronic appliance;
receiving the shared data from the connector at the second electronic appliance; and
storing the shared data in a storage unit at the second electronic appliance.

20. The method of claim 19, further comprising:
enabling the second electronic device;
determining if the shared data is transmitted from the first electronic device;
entering a receiving mode at the second electronic device; and
receiving the shared data from the connector in the receiving mode, wherein if the determination is the shared data was not transmitted by the first electronic device, the second electronic device enters a set-up mode and a set-up menu is outputted for display.

21. An apparatus for setting shared data in a composite apparatus, comprising:
a key input unit configured to select at least one selectable shared menu responsive to a request;
a first central processing unit coupled to the key input unit, wherein the first central processing unit is configured to transmit shared data of the composite apparatus of a first electronic appliance and a second electronic appliance corresponding to the at least one selected shared menu;
a first storage unit configured to store the shared data corresponding to the at least one shared menu selected from the first central processing unit;
a second central processing unit configured to receive the shared data transmitted from the first central processing unit and output the received shared data; and
a second storage unit configured to store the shared data outputted from the second central processing unit.

22. The apparatus of claim 21, wherein shared menus are used in both the first and second electronic appliances of the composite apparatus, and a set-up menu is one of the at least one shared menus.

23. The apparatus of claim 21, wherein shared menus include an ACMS menu displaying country codes, a language menu displaying a language code, and a parent lock menu.

24. The apparatus of claim 21, wherein the shared data includes at least one of a country data corresponding to a country code, a language data corresponding to a language data, and a parent lock rating grade data.

25. The apparatus of claim 24, wherein the second central processing unit outputs a set up menu if data corresponding to the at least one shared menu is not received from the first central processing unit, and outputs a data corresponding to a selected menu if a user selects one menu among shared menus displayed on a set up menu.

26. The apparatus of claim 21, further comprising a display unit configured to display a set up menu and the at least one shared menus on a display device depending on a control signal of the first central processing unit, wherein the first and second storage units are electrically erasable programmable read-only memories.

27. The apparatus of claim 21, wherein the first central processing unit is installed in the first electronic appliance of the composite apparatus, and transmits the shared data to the second central processing unit installed in the second electronic appliance.
